# EUROPÄISCHE PATENTSCHRIFT

(11) **EP 2 681 805 B1**
(45) Veröffentlichungstag und Bekanntmachung des Hinweises auf die Patenterteilung: **18.01.2017**
(21) Anmeldenummer: 12709274.0
(22) Anmeldetag: 19.01.2012
(51) Int. Cl.: H01R 13/514, H01R 13/73, G02B 6/38

(54) **SYSTEM VON AUF MONTAGESCHIENEN FIXIERTEN STECKVERBINDERN**
SYSTEM OF PLUG CONNECTORS FASTENED TO MOUNTING RAILS
SYSTÈME DE CONNECTEURS ENFICHABLES FIXÉS SUR DES RAILS DE MONTAGE

(30) Priorität: 03.03.2011 DE 102011001069
(43) Veröffentlichungstag der Anmeldung: 08.01.2014
(73) Patentinhaber: Harting Electric GmbH & Co. KG, 32339 Espelkamp (DE)
(72) Erfinder: SCHLEGEL, Bernard, 32369 Rahden (DE); NASS, Andreas, 31606 Warmsen (DE); GRIEPENSTROH, Sebastian, 32312 Lübbecke (DE); GARSKE, Stefan, 49152 Bad Essen (DE)
(86) Internationale Anmeldenummer: PCT/DE2012/100011
(87) Internationale Veröffentlichungsnummer: WO 2012/116691

(56) Entgegenhaltungen:
- US-A1- 2007 254 520
- US-A1- 2008 014 799

## Beschreibung

Die Erfindung betrifft eine Verriegelungsvorrichtung für ein erstes System von Steckverbindern mit einem zweiten System von Steckverbindern nach dem Oberbegriff des Anspruchs 1.

Derartige Verriegelungsvorrichtungen werden benötigt, damit der Kontakt zwischen miteinander kontaktierten Systemen von Steckverbindern nicht versehentlich gelöst werden kann.

### Stand der Technik

Die DE 20 2008 006 934 U1 zeigt einen Steckverbinder für Lichtwellenleiter. Die Gehäusekörper tragen jeweils nur ein Kontaktierungselement und können aneinandergereiht werden, indem am Gehäusekörper angeformte Stege in dazu passende Ausnehmungen eines benachbarten Gehäusekörpers geführt werden. Die aneinandergereihten Steckverbinder bilden ein System von Steckverbindern.

Die KR1020060091923 A zeigt ein System von Steckverbindern, die auf einer Montageschiene aneinandergereiht sind. Die einzelnen Steckverbinder sind untereinander nicht verbunden. Die Montageschiene wird beidseitig über ein Verriegelungselement abgeschlossen. Das Verriegelungselement sorgt dafür, dass die Steckverbinder nicht von der Montageschiene heruntergeschoben werden können.

Die KR1020060091923 A zeigt keine Möglichkeit wie das System von Steckverbindern mit einem System von Gegensteckern verbunden werden kann, die sich ebenfalls auf einer Montageschiene befinden.

### Aufgabenstellung

Die Aufgabe der Erfindung besteht darin, einen Verriegelungsvorrichtung für ein System von Steckverbindern vorzuschlagen, die die einfache Kontaktierung von Systemen von Steckverbindern miteinander ermöglicht.

Die Aufgabe wird durch die Merkmale des Anspruchs 1 gelöst.

Vorteilhafte Ausgestaltungen der Erfindung sind in den Unteransprüchen angegeben.

Das erfindungsgemäße System von Steckverbindern besteht aus einer Reihe aneinandergekoppelter Steckverbinder, die zusammen auf einer Montageschiene fixiert sind.

Die einzelnen Steckverbinder sind von einem Gehäusekörper umgeben. Vorteilhafterweise ist der Gehäusekörper einteilig ausgestaltet. Dies kann durch die bekannten Kunststoffspritzgussverfahren - im Falle eines Kunststoffgehäuses - oder durch bekannte Zinkdruckgussverfahren - im Falle eines metallischen Gehäuses - realisiert werden.

Es ist auch möglich den Gehäusekörper aus einem Kompositwerkstoff, beispielsweise aus einer Kombination von Metall und Kunststoff, zu gestalten. Innerhalb des Gehäusekörpers ist ein Haltekäfig verliersicher verrastet. Der Haltekäfig ist im Wesentlichen als Hohlzylinder ausgestaltet. An einem Ende weist der Haltekäfig zwei in axialer Richtung weisende Arme auf, die ein Kontaktierungselement verliersicher umgreifen. Am anderen Ende umgreift der Haltekäfig den Kabelmantel eines an den Steckverbinder anzuschließenden Kabels. Ein Leiter des Kabels ist mit dem Kontaktierungselement beispielsweise über eine Crimpverbindung kontaktiert.

An der Außenseite des Gehäusekörpers sind beidseitig Kuppelelemente vorgesehen, die es ermöglichen zwei oder mehr Steckverbinder mit gleichartigem Gehäusekörper zusammen zu kuppeln.

Vorzugsweise ist das eine Kuppelelement als bogenförmige Nut und das andere Kuppelelement als zylinderförmiger Stift ausgebildet. Der zylinderförmige Stift des einen Gehäusekörpers ist dazu ausgelegt in die bogenförmige Nut des zu kuppelnden gleichartigen Gehäusekörpers eingeführt zu werden. So können mehrere Steckverbinder mit gleichartigem Gehäusekörper aneinandergereiht werden.

Bei der Aneinanderreihung brauchen nur die Gehäusekörper gleichartig ausgeführt zu sein. Das Innenleben der Steckverbinder kann durchaus unterschiedlich sein. So können beispielsweise mehrpolige elektrische Steckverbinder mit einpoligen Lichtwellenleiter-Steckverbindern kombiniert werden. Dadurch kann eine hohe Modularität einer Steckverbinderanordnung erreicht werden. Eine Steckverbinderanordnung wird hier auch als System von Steckverbindern bezeichnet.

Außen am Gehäusekörper sind außerdem Fixiermittel angeformt, die es ermöglichen den Steckverbinder auf einer Montageschiene, beispielsweise einer Hutschiene, zu fixieren.

Die Steckverbinder können untereinander über die Kuppelelemente miteinander gekoppelt werden und außerdem auf einer Montageschiene verliersicher fixiert werden.

Die Fixiermittel bestehen aus einer Kombination von Fixiernasen und Federstiften. Die Fixiernasen stehen in axialer Richtung ab und greifen in einen Kragen der Montageschiene ein. Die Fixierstifte sind federnd ausgeführt und können beim Verrasten auf der Montageschiene zunächst ausweichen, bevor sie hinter einen weiteren Kragen der Montageschiene einrasten.

Der Steckverbinder wird durch eine Kabelverschraubung komplettiert, die die Kabelzugentlastung und die Abdichtung des Gehäusekörpers gegen Medien wie Staub und Wasser gewährleistet.

Wenn eine gewünschte Anzahl von Steckverbindern auf einer Montageschiene aufgereiht ist, sprich man auch von einem System von Steckverbindern.

Um zwei Systems von Steckverbindern miteinander zu kontaktieren, müssen die Montageschienen auf denen sich jeweils die Systeme von Steckverbindern befinden zusammengeführt werden. Dies wird über eine Verriegelungsvorrichtung realisiert, die die einzelnen Montageschienen verliersicher miteinander verbindet, so dass auch die gegenüberliegenden Steckverbinder miteinander kontaktiert werden.

Die Verriegelungsvorrichtung besteht aus einem passiven Verriegelungsteil und einem aktiven Verriegelungsteil. Das aktive Verriegelungsteil trägt die Verriegelungselemente, mit denen das passive Verriegelungsteil an das aktive Verriegelungsteil angebunden wird.

Beim Verriegeln des aktiven mit dem passiven Verriegelungsteil, werden die Montageschienen der Systeme von Steckverbindern zueinander geführt und miteinander verbunden. Außerdem werden die einzelnen, gegenüberliegenden Steckverbinder miteinander kontaktiert.

Vorteilhafterweise bilden die Verriegelungselemente des passiven Verriegelungsteils eine Kniehebelverriegelung. Dadurch wird eine besonders stabile Verriegelung erreicht.

Um das Zusammenführen der miteinander zu verbindenden Montageschienen zu erleichtern, weist die Verriegelungsvorrichtung eine Führung auf. Die Führung besteht aus einem Bolzen am aktiven Verriegelungsteil, der beim Verriegelungsvorgang in eine dafür vorgesehene Öffnung im passiven Verriegelungsteil geführt wird.

Das passive Verrieglungsteil umfasst beidseitig Fixiermittel mit welchen eine Montageschiene fixierbar ist. So können zwei Montageschienen übereinander - also horizontal beabstandet - statisch stabil angeordnet werden. Durch das Aneinanderkoppeln des passiven mit dem aktiven Verriegelungsteils können dann kontaktierte Systeme von Steckverbindern horizontal beabstandet und statisch stabil angeordnet werden. Über die Verriegelungsvorrichtung können beliebig viele Systeme von Steckverbindern übereiander angeordnet und so genannte Steckverbinder-Arrays gebildet werden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Steckverbinders,
- Fig. 2: eine weitere perspektivische Darstellung des Steckverbinders,
- Fig. 3: eine perspektivische Darstellung des Steckverbinders ohne Grundkörper,
- Fig. 4: eine perspektivische Darstellung eines Kontaktierungselements,
- Fig. 5: eine Seitenansicht des auf einer Montageschiene montierten Steckverbinders,
- Fig. 6: eine perspektivische Darstellung zweier Steckverbinder beim Koppelvorgang,
- Fig. 7: eine perspektivische Ansicht zweier miteinander verbundenen Systeme von Steckverbinder und
- Fig. 8: eine Seitenansicht der Verriegelungsvorrichtung.

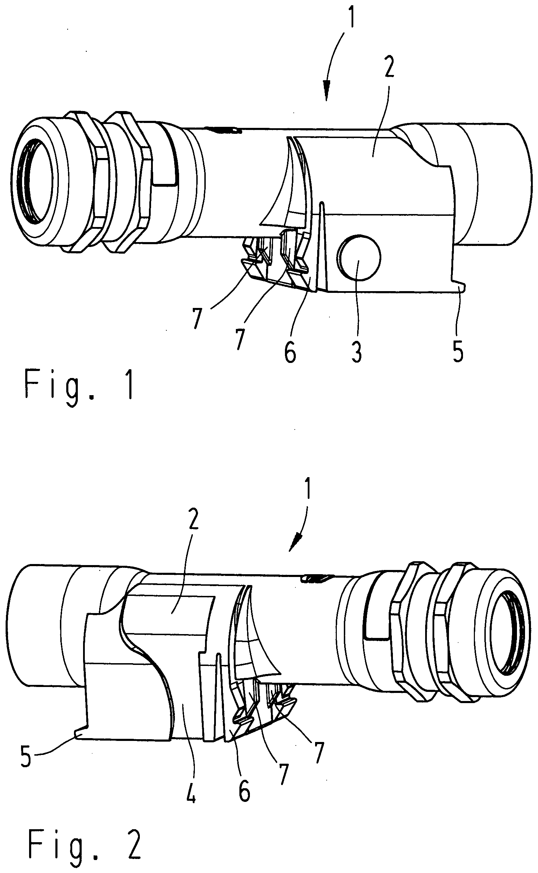

Die Figuren 1 und 2 zeigen perspektivische Darstellungen eines Ausführungsbeispiels des erfindungsgemäßen Steckverbinders. Die Erfindung ist aber nicht auf das hier gezeigte Ausführungsbeispiel beschränkt.

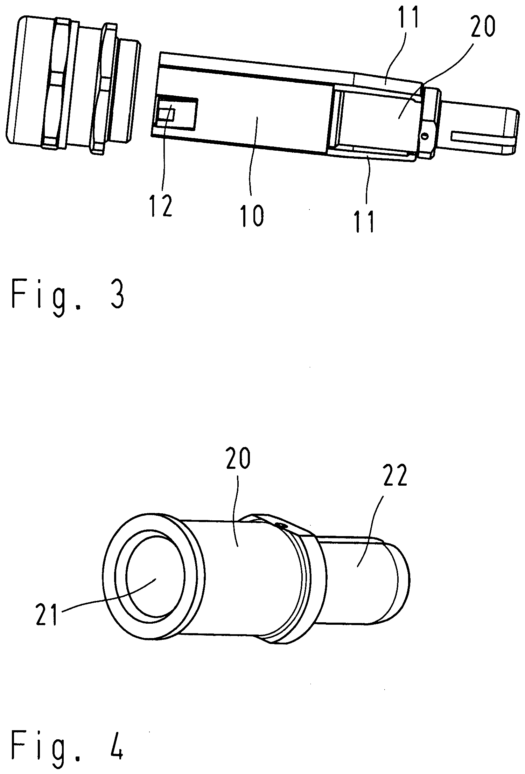

Der Steckverbinder 1 wird vom einem Grundkörper 2 umschlossen. Innerhalb des hohlen Grundkörpers 2 ist ein Haltekäfig 10 verliersicher verrastet. Die Figur 3 zeigt den Steckverbinder 1 ohne Grundkörper 2. Der Haltekäfig 10 weist an einem Ende Verrastelemente 12 auf, die in dazu passende Hinterschnitte (nicht gezeigt) innerhalb des Grundkörpers eingreifen und den Haltekäfig 10 so im Grundkörper 2 fixieren. An diesem Ende durchdringt auch der Kabelmantel des anzuschließenden Kabels (nicht gezeigt) den Haltekäfig.

An einem anderen Ende weist der Haltekäfig Arme 11 auf, die das Kontaktierungselement 20 umgreifen. Dadurch wird das Kontaktierungselement 20 im Grundkörper 2 entlang der axialen Symmetrieachse fixiert.

Wie bereits oben erwähnt, wird das gegenüberliegende Ende des Haltekäfigs 10 vom Kabelmantel des anzuschließenden Kabels durchdrungen. Der Leiter des anzuschließenden Kabels ist mit dem Kontaktierungselement 20 vercrimpt.

Die Figur 4 zeigt die perspektivische Darstellung des Kontaktierungselements 20. Einseitig weist das Kontaktierungselement 20 eine Crimpöffnung 21 zur Aufnahme des Leiters des anzuschließenden Kabels auf. Die andere Seite des Kontaktierungselements 20 ist in diesem Ausführungsbeispiel als Stiftkontakt 22 ausgeführt. Es kann aber auch ein Buchsenkontakt vorgesehen sein.

Die Erfindung ist nicht auf Einkontaktsteckverbinder beschränkt. Das Kontaktierungselement 20 kann auch mehrere Crimpöffnungen 21 und Kontakte 22 zum anschließen mehradriger Kabel aufweisen.

Der Grundkörper 2 umfasst an einer Seite einen zylinderförmigen Stift 3 und gegenüberliegend eine bogenförmige Nut 4. Der Stift 3 eines Steckverbinder 1 ist dazu geeignet, in die Nut 4 eines weiteren Steckverbinders 1 eingeführt zu werden. So werden mehrere Steckverbinder 1 aneinandergereiht beziehungsweise miteinander gekoppelt. Ist eine gewünschte Anzahl von Steckverbindern erreicht, spricht man von einem System von Steckverbindern 1, 1'.

Am Gehäusekörper 2 sind außerdem Fixiernasen 5 und Federstifte 6 vorgesehen, die zusammen das reversible Fixieren des Steckverbinders 1 auf einer Montageschiene 30 ermöglichen. Die Fixiernasen 5 greifen in den Hinterschnitt 31 der Montageschiene 30 ein. Beim Herunterklappen des Steckverbinders 1 in Richtung der Montageschiene 30, werden die Federstifte von einem angeschrägten Kranz 33 zunächst zurückgebogen, um dann in einen weiteren Hinterschnitt 32 der Montageschiene 30 einzugreifen.

Der Gehäusekörper 2 umfasst weiterhin Abstützkonturen 7, die verhindern, dass bei einer Bewegung der Steckverbinders 1 auf der Montageschiene 30 in Steckrichtung, die daraus resultierende Kraft nicht vollständig von den Federstiften aufgefangen werden muss.

Der Steckverbinder 1 ist mit einer Kabelverschraubung 40 versehen, die aus dem Stand der Technik allgemein bekannt ist. Daher wird hier nicht näher auf die Kabelverschraubung eingegangen. Die Kabelverschraubung 40 dient zur Zugentlastung des anzuschließenden Kabels und zur Abdichtung des Grundkörpers 2 gegen Medien wie Staub und Wasser.

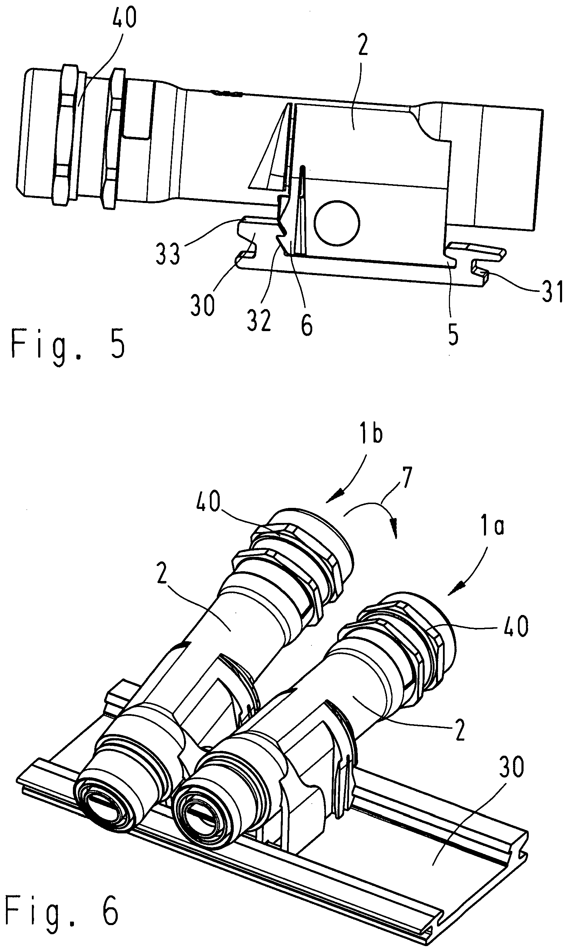

Die Figur 6 zeigt den Koppelvorgang zweier Steckverbinder auf der Montageschiene 30. Ein Steckverbinder 1 a ist hier bereits auf der Montageschiene fixiert. Die Fixiernasen 5 des daran zu koppelnden Steckverbinders 1 b werden zunächst in den Hinterschnitt 31 eingelegt. Dann kann der Steckverbinder 1 b in Richtung des Pfeils 7 zur Montageschiene 30 hin bewegt werden. Die bogenförmige Nut des Steckverbinders 1 b greift hinter den zylinderförmigen Stift 3 des Steckverbinders 1 a. Aufgrund der Bogenform der Nut 4, kann der Steckverbinder 1 b in Richtung des Pfeils 7 geführt werden. Anschließend rasten die Federstifte wie oben bereits beschrieben in den Hinterschnitt 32 der Montageschiene 30 ein. Die Steckverbinder 1 a und 1 b sind sowohl miteinander gekoppelt als auch auf der Montageschiene 30 fixiert.

Beim Abkoppeln eines Steckverbinders aus einem modularem System von Steckverbindern, wird genau umgekehrt verfahren. Die Federstifte 6 müssen zunächst händisch aus dem Hinterschnitt 32 gedrückt werden. Anschließend kann der Steckverbinder entgegen der Pfeilrichtung 7 vom benachbarten Steckverbinder und der Montageschiene 30 gelöst werden.

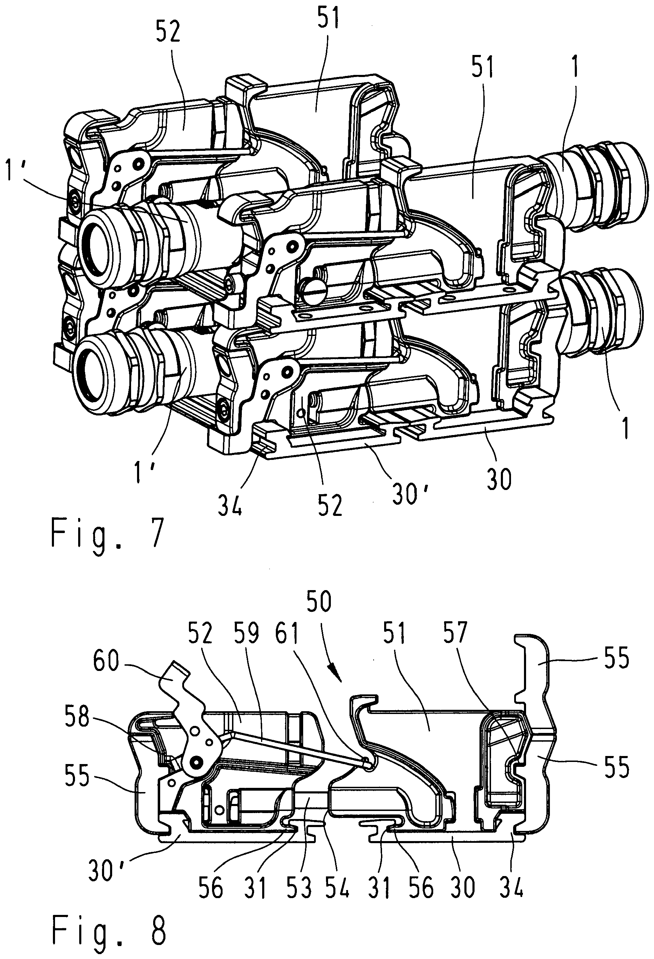

Die Figur 8 zeigt die Seitenansicht einer Verriegelungsvorrichtung 50. Die Verriegelungsvorrichtung 50 besteht aus einem passiven Verriegelungsteil 51 und einem aktiven Verriegelungsteil 52.

Sowohl das aktive 52 wie auch das passive Verriegelungsteil 51 weisen Nasen 56, die in die Hinterschnitte 31 der Montageschiene 30 einführbar sind. Über einen Verbinder 55 können beide Verriegelungsteile 51, 52 auf der jeweiligen Montageschiene 30, 30' fixiert werden. Der Verbinder 55 greift dabei gleichzeitig in eine Kerbe 57, 58 des Verbindungsteils 51, 52 und in eine hintere Nut 34 der Montageschiene 30 ein.

Um die Verriegelungsteile 51, 52 leicht zusammenführen zu können, ist eine Führung vorgesehen. Das passive Verriegelungsteil 51 umfasst eine Öffnung 54, in welche ein Bolzen 53 des aktiven Verriegelungsteils 52 einführbar ist.

Die Verriegelung beider Verriegelungsteile 51, 52 wird über eine am aktiven Verriegelungsteil 52 angebrachte Spannfeder 59 realisiert, die mit einem Spannhebel 60 (ebenfalls am aktiven Verriegelungsteil 52 angebracht) verbunden ist. Die Spannfeder 59 wird über eine Spannnase 61 des passiven Verriegelungsteiles 51 gelegt. Durch Betätigung des Spannhebels 60 werden die beiden Verriegelungsteile 51, 52 zusammengeführt und miteinander reversibel verbunden. Die Kombination aus Spannnase 61, Spannfeder 59 und Spannhebel 60 arbeitet nach dem Kniehebelprinzip und bewirkt dadurch gleichzeitig eine besonders stabile Koppelung der Verriegelungsteile 51, 52 und der miteinander kontaktierten Steckverbinder 1, 1'. Außerdem unterstützt das Kniehebelprinzip den Entriegelungsvorgang.

Die Figur 7 zeigt mehrere Ebenen von Systemen von Steckverbindern 1, 1'. Zwei gegenüberliegende Systeme von Steckverbindern 1, 1' sind über die Verriegelungsvorrichtung 50 miteinander kontaktiert. Auf die Verriegelungsvorrichtung 50 kann beidseitig eine Montageschiene 30, 30' fixiert werden. Dadurch können mehrere Systeme von Steckverbindern 1, 1' in einem gleichen Abstand übereinander angeordnet werden.

### Bezugszeichenliste

### System von Steckverbindern

| | | | |
|---|---|---|---|
| 1 | **Steckverbinder** | **10** | **Haltekäfig** |
| 2 | Grundkörper | 11 | Arm |
| 3 | Zylinderförmiger Stift | 12 | Verrastelement |
| 4 | Bogenförmige Nut | 13 | |
| 5 | Fixiernasen | 14 | |
| 6 | Federstifte | **20** | **Kontaktierungselement** |
| 7 | Abstützkontur | 21 | Crimpöffnung |
| | | | |
| **30** | **Montageschiene** | **50** | **Verriegelungsvorrichtung** |
| 31 | Hinterschnitt | 51 | Passiver Verriegelungsteil |
| 32 | Hinterschnitt | 52 | Aktiver Verriegelungsteil |
| 33 | Kranz | 53 | Bolzen |
| 34 | Nut | 54 | Öffnung |
| | | 55 | Verbinder |
| **40** | **Kabelverschraubung** | 56 | Nase |
| | | 57 | Kerbe |
| | | 58 | Kerbe |
| | | 59 | Spannfeder |
| | | 60 | Spannhebel |
| | | 61 | Spannnase |
| | | 62 | |

## Patentansprüche

1. Verriegelungsvorrichtung (50) für ein erstes System von Steckverbindern (1), die auf einer ersten Montageschiene (30) fixiert sind, und einem zweiten System von Steckverbindern (1'), die auf einer zweiten Montageschiene (30') fixiert sind,
und zumindest einem weiteren System von Steckverbindern (1'), die auf einer weiteren Montageschiene fixierbar sind,
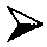 **wobei** die Verriegelungsvorrichtung (50) aus einem passiven Verriegelungsteil (51) und einem aktiven Verriegelungsteil (52) gebildet ist,
wobei das passive Verriegelungsteil (51) und das aktive Verriegelgungsteil (52) jeweils eine Nase (56) aufweisen, die in einen Hinterschnitt (31) der jeweiligen Montageschiene (30, 30') einführbar ist und dass die Verriegelungsvorrichtung (50) einen Verbinder (55) aufweist, womit das passive Verriegelungsteil (51) und das aktive Verriegelungsteil (52) auf der jeweiligen Montageschiene (30, 30') fixierbar sind,
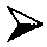 **wobei** beim Verriegeln des aktiven Verriegelungsteils (52) mit dem passiven Verriegelungsteil (51) 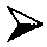
die erste und zweite Montageschiene (30, 30') miteinander verbunden sind
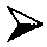 und die auf der ersten und zweiten Montageschiene (30, 30') befindlichen Steckverbinder (1, 1') miteinander kontaktiert sind, wobei
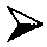 auf dem passiven Verriegelungsteil (51) die weitere Montageschiene mit dem weiteren System von Steckverbindern (1) fixierbar ist, wodurch mehrere Systeme von Steckverbindern (1) in einem gleichen Abstand übereinander angeordnet sind.

2. Verriegelungsvorrichtung (50) nach Anspruch 1,
**dadurch gekennzeichnet, dass**
das passive Verriegelungsteil (51) mit dem aktiven Verriegelungsteil (52) über eine Kniehebelverriegelung koppelbar ist.

3. Verriegelungsvorrichtung (50) nach einem der vorstehenden Ansprüche,
**dadurch gekennzeichnet, dass**
der aktive Verriegelungsteil (52) einen Bolzen (53) aufweist, der beim Verriegelungsvorgang in eine dafür vorgesehene Öffnung (54) des passiven Verriegelungsteils (51) führbar ist.

## Claims

1. Locking apparatus (50) for a first system of plug connectors (1) which are fixed on a first mounting rail (30), and a second system of plug connectors (1') which are fixed on a second mounting rail (30'), and at least one further system of plug connectors (1') which can be fixed on a further mounting rail, wherein the locking apparatus (50) is formed from a passive locking part (51) and an active locking part (52), wherein the passive locking part (51) and the active locking part (52) each have a lug (56) which can be inserted into an undercut (31) in the respective mounting rail (30, 30'), and that the locking apparatus (50) has a connector (55) with which the passive locking part (51) and the active locking part (52) can be fixed on the respective mounting rail (30, 30'), wherein, when the active locking part (52) is locked to the passive locking part (51), the first and the second mounting rail (30, 30') are connected to one another and the plug connectors (1, 1') which are located on the first and the second mounting rail (30, 30') make contact with one another, wherein the further mounting rail can be fixed on the passive locking part (51) by the further system of plug connectors (1), as a result of which a plurality of systems of plug connectors (1) are arranged at an identical distance one above the other.

2. Locking apparatus (50) according to Claim 1, **characterized in that** the passive locking part (51) can be coupled to the active locking part (52) by means of a toggle lever lock.

3. Locking apparatus (50) according to either of the preceding claims, **characterized in that** the active locking part (52) has a bolt (53) which can be guided into an opening (54), which is provided for it, in the passive locking part (51) during the locking process.

## Revendications

1. Dispositif de verrouillage (50) pour un premier système de connecteurs à enficher (1) qui sont fixés sur un premier rail de montage (30), et un deuxième système de connecteurs à enficher (1') qui sont fixés sur un deuxième rail de montage (30'), et au moins un système supplémentaire de connecteurs à enficher (1') qui peuvent être fixés sur un rail de montage supplémentaire,
le dispositif de verrouillage (50) étant composé d'une partie de verrouillage passive (51) et d'une partie de verrouillage active (52),
la partie de verrouillage passive (51) et la partie de verrouillage active (52) possédant respectivement un tenon (56) qui peut être introduit dans une contre-dépouille (31) du rail de montage (30, 30') correspondant, et que le dispositif de verrouillage (50) possédant une attache (55) avec laquelle la partie de verrouillage passive (51) et la partie de verrouillage active (52) peuvent être fixées sur le rail de montage (30, 30') correspondant,
lors du verrouillage de la partie de verrouillage passive (51) avec la partie de verrouillage active (52),
- le premier et le deuxième rail de montage (30, 30') étant reliés ensemble
- et les connecteurs à enficher (1, 1') qui se trouvent sur le premier et le deuxième rail de montage (30, 30') étant mis en contact les uns avec les autres,
- le rail de montage supplémentaire pouvant être fixé sur la partie de verrouillage passive (51) avec un système supplémentaire de connecteurs à enficher (1), plusieurs systèmes de connecteurs à enficher (1) étant disposés les uns au-dessus des autres à un écart identique.

2. Dispositif de verrouillage (50) selon la revendication 1, **caractérisé en ce que** la partie de verrouillage passive (51) peut être accouplée à la partie de verrouillage active (52) par le biais d'un verrouillage à genouillère.

3. Dispositif de verrouillage (50) selon l'une des revendications précédentes, **caractérisé en ce que** la partie de verrouillage active (52) possède un goujon (53) qui, lors de l'opération de verrouillage, peut être guidé dans une ouverture (54) prévue à cet effet dans la partie de verrouillage passive (51).
